(19) Europäisches Patentamt
European Patent Office
Office européen des brevets

(11) EP 1 992 649 A1

(12) **EUROPEAN PATENT APPLICATION**
published in accordance with Art. 158(3) EPC

(43) Date of publication:
**19.11.2008 Bulletin 2008/47**

(21) Application number: **07714199.2**

(22) Date of filing: **14.02.2007**

(51) Int Cl.:
***C08F 10/02*** *(2006.01)* ***B65D 1/00*** *(2006.01)*

(86) International application number:
**PCT/JP2007/052646**

(87) International publication number:
**WO 2007/094376 (23.08.2007 Gazette 2007/34)**

(84) Designated Contracting States:
**BE DE**

(30) Priority: **15.02.2006 JP 2006038339**

(71) Applicants:
- **Mitsui Chemicals, Inc.
Tokyo 105-7117 (JP)**
- **Prime Polymer Co., Ltd.
Minato-ku
Tokyo (JP)**

(72) Inventors:
- **FUKUSHI, Keikoc/o PRIME POLYMER CO., LTD.
ihara-shi, Chiba;2990108 (JP)**
- **IWAMASA, Kenjic/o PRIME POLYMER CO., LTD.
Chiba;2990108 (JP)**
- **OKAMOTO, Masahikoc/o MITSUI CHEMICALS, INC.,
Chiba;2990265 (JP)**

(74) Representative: **Cresswell, Thomas Anthony
J.A. KEMP & CO.
14 South Square
Gray's Inn
London
WC1R 5JJ (GB)**

# (54) ETHYLENE RESIN AND BLOW-MOLDED ARTICLE COMPRISING THE SAME

(57) An ethylene-based resin satisfying simultaneously the following requirements [a] to [c] is excellent in strength and moldability and is suitably used for a blow molded article (a hollow molded article). [a] The environmental stress cracking resistance (ESCR), T, at 50°C is 500 hours or more in the case of a flexural modulus of 1000 MPa to 1500 MPa and is 100 hours or more in the case of a flexural modulus of 1500 MPa to 2000 MPa, as measured according to ASTM-D-1693, [b] the melt tension at 190°C is 50 (mN) or more and [c] the melt breaking drawing rate is 90 (m/min) or less.

EP 1 992 649 A1

**Description**

[TECHNICAL FIELD]

The present invention relates to a polyethylene-based resin excellent in strength and moldability and a blow molded article (a hollow molded article) composed of the resin.

[BACKGROUND ART]

Conventionally, there has been a major problem in the field of hollow molded articles of how the amount of resins used is reduced from the viewpoint of resource conservation and reduction of the volume of waste materials. In addition, in order to minimize the production cost, polyethylene which is easily molded has been desired to be provided.

However, for example, in polyethylene used for a container of detergents and the like, especially in the field of hollow molded articles composed of a high density polyethylene, the wall thickness of a container is unavoidably increased in order to ensure the buckling strength required at the time of filling of the content liquid, transporting and the like, thereby resulting in the increase of the amount of resins used. When the wall thickness of a container is reduced in order to reduce the amount of resins used, a polyethylene resin having a high density and a high rigidity is required to be used in order to ensure the buckling strength. However, when a container obtained by using existing polyethylene materials having a high density and a high rigidity contains a detergent, a softener or a bleacher as a content liquid, the container frequently cracks because of poor environmental stress cracking resistance (ESCR), which prevents the container from the practical application.

It is known that, when a polyethylene resin has a high molecular weight in order to ensure the ESCR, the melt flow rate (MFR) is decreased, thereby resulting in poor productivity because the fluidity at the time of molding is reduced. For example, Japanese Patent Application Laid-Open Publication No. 2003-507538 describes a polyethylene-based resin container having an ESCR improved by a conventionally known bimodal process. However, the resins described in Examples of the publication have an MFR of 7.3 (g/10 min) or lower under a load of 21.6 kg, in other words, have poor fluidity, and it is also difficult to consider that the resins are at the practical level in terms of moldability represented by melt tension and melt breaking drawing rate.

With the background art described above, there has been desired the advent of a polyethylene-based resin for a hollow molded article composed of a high density polyethylene-based resin capable of preparing a polyethylene hollow molded article which is excellent in buckling strength even when the wall thickness is reduced and is excellent in environmental stress cracking resistance as well as moldability, and of a hollow molded article composed of the resin.

In addition, in order to increase the productivity of hollow molded articles, there has been desired a resin which has a high melt tension and which is formed into a parison that can be cut easily. Further, it is an important requirement that the product skin should not be deteriorated, even when a hollow molded article is produced at a high speed in order to increase the productivity.

[Patent Document 1] Japanese Patent Application Laid-Open Publication No. 2003-507538

[DISCLOSURE OF THE INVENTION]

[PROBLEMS TO BE SOLVED BY THE INVENTION]

An object of the present invention is to solve the problems associated with the conventional techniques as mentioned above, and to provide a polyethylene-based resin which has a high flexural modulus, an excellent buckling strength, an excellent ESCR of a bottle thereof and excellent moldability in spite of being resistant to environmental stress cracking, and a hollow molded article composed of the resin.

[MEANS FOR SOLVING THE PROBLEMS]

The ethylene-based resin of the present invention is characterized by simultaneously satisfying the following requirements [a] to [c].

[a] The environmental stress cracking resistance (ESCR), T, at 50°C is 500 hours or more in the case of a flexural modulus of 1000 MPa to 1500 MPa and is 100 hours or more in the case of a flexural modulus of 1500 MPa to 2000 MPa, as measured according to ASTM-D-1693.

[b] The melt tension at 190°C is 50 (mN) or more.

[c] The melt breaking drawing rate is 90 (m/min) or less.

The preferred embodiment of an ethylene-based resin of the present invention simultaneously satisfies the requirements [a] to [c] and the following requirements [d] to [f].

[d] The flexural modulus, M (MPa), satisfies $1000 \leq M \leq 2000$, as measured at 23°C according to ASTM-D-790.

[e] The MFR (g/10 min) is 0.10 or more and less than 2.0, as measured at 190°C under a load of 2.16 kg according to JIS K7210.

[f] The MFR ratio of the MFR (g/10 min) under a load of 2.16 kg to the HLMFR (g/10 min) under a load of 21.6 kg (HLMFR/MFR) is 50 or more and less than 150, as measured at 190°C according to JIS K7210.

Further, the present invention relates to a blow molded article, preferably a fuel tank, an industrial chemical can or a bottle container, which is formed from the above-mentioned ethylene-based resin.

[EFFECT OF THE INVENTION]

The ethylene-based resin of the present invention is excellent in rigidity and ESCR and excellent in stability and cutting property of a parison thereof, and a bottle formed from the resin is also excellent in appearance. The ethylene-based resin and the hollow molded article of the present invention may be suitably used for applications such as containers for detergents, shampoos, conditioners, bleachers, fabric softeners, cosmetics, waxes, cooking oils, mayonnaise, green horseradish paste and the like, fuel tanks, industrial chemical cans, drums, water storage tanks and the like.

[BEST MODE FOR CARRYING OUT THE INVENTION]

Hereinafter, there will be explained in detail the ethylene-based resin related to the present invention, and the blow molded article composed of the resin.

The ethylene-based resin of the present invention simultaneously satisfies the above-mentioned requirements [a] to [c] and preferably satisfies the requirements [d] to [f] in addition to the requirements [a] to [c]. Hereinafter, these requirements will be explained in detail.

<u>Requirement [a]</u>

The ethylene-based resin of the present invention has an environmental stress cracking resistance (ESCR), T, of 500 hours or more, preferably 600 hours or more and 1000 hours or less and more preferably 600 hours or more and 1000 hours or less, as measured according to ASTM-D-1698, in the case of a flexural modulus of 1000 MPa or more and less than 1500 MPa. In the case of a flexural modulus of 1500 MPa or more and less than 2000 MPa, the ethylene-based resin has an environmental stress cracking resistance, T, of 100 hours or more, preferably 100 hours or more and 500 hours or less and more preferably 150 hours or more and 500 hours or less.

The use of the above-mentioned ethylene-based resin prevents the occurrence of environmental stress cracking in spite of the high rigidity.

In an ethylene-based polymer (E) described later, the T of the ethylene-based resin may be adjusted within the above range by copolymerizing the ethylene main chain with 0.01 to 0.5% by mol of skeletons derived from α-olefins having 3 to 20 carbon atoms such as propylene, butene-1, hexene-1, 4-methylpentene-1, octene-1 and the like, preferably butene-1, hexene-1, 4-methylpentene-1 and octene-1. The amount of the comonomer to be copolymerized may be reduced to decrease the T, and conversely the amount of the comonomer may be increased to increase the T.

<u>Requirement [b]</u>

The ethylene-based resin of the present invention has a melt tension at 190°C of 50 (mN) or more, preferably 50 (mN) or more and 300 (mN) or less, and more preferably 55 (mN) or more and 300 (mN) or less.

The melt tension of 50 (mN) or more ensures stability of a parison during extrusion.

Examples of methods for increasing the melt tension of the ethylene-based resin include blending a polyethylene having a low MFR or a polyethylene having a long chain branch. It is well-known that the polyethylene having a low MFR may be obtained by controlling the ratio of hydrogen to ethylene at the time of polymerization. The polyethylenes having a long chain branch include a high-pressure polyethylene, a polyethylene polymerized using a chromium-based catalyst, and a polyethylene polymerized using metallocene. In other words, the melt tension of the ethylene-based resin may be adjusted to the above range by controlling the blending amount of the polyethylene having a low MFR and the polyethylene having a long chain branch.

<u>Requirement [c]</u>

The ethylene-based resin of the present invention has a melt breaking drawing rate of 90 (m/min) or less and preferably 1 (m/min) or more and 80 (m/min) or less.

The melt breaking drawing rate of 90 (m/min) or less ensures excellent cutting properties in cutting a parison.

Examples of methods for reducing the melt breaking drawing rate of the ethylene-based resin include blending a polyethylene having a low MFR or a polyethylene having a long chain branch. It is well-known that the polyethylene having a low MFR may be obtained by controlling the ratio of hydrogen to ethylene at the time of polymerization. The polyethylenes having a long chain branch include a high-pressure polyethylene, a polyethylene polymerized using a chromium-based catalyst and a polyethylene polymerized using a metallocene catalyst. In other words, the melt breaking drawing rate of the ethylene-based resin may be adjusted to the above range by controlling the blending amount of the polyethylene having a low MFR and the polyethylene having a long chain branch.

Requirement [d]

The ethylene-based resin of the present invention has a flexural modulus, M, of 1000 MPa or more and 2000 MPa or less, preferably 1100 MPa or more and 1800 MPa or less and more preferably 1200 MPa or more and 1700 MPa or less, as measured in accordance with JIS K6922-2. The ethylene-based resin having this high rigidity forms a bottle which is a hollow molded article with increased buckling strength. In addition, as a result of the bottle's buckling strength being increased due to high elastic modulus, the wall thickness of the hollow molded article may be reduced.

Examples of methods for increasing the flexural modulus of the ethylene-based resin include increasing the density of the resin. Methods which can increase the density of the polyethylene resin, for example, include reducing the comonomer amount at the time of polymerization, as is well known in the art.

Requirement [e]

The ethylene-based resin of the present invention has a melt flow rate in the range of preferably 0.1 to 20 (g/10 min) and more preferably 0.2 to 1.5 (g/10 min), as measured at 190°C under a load of 2.16 kg according to JIS K7210. The ethylene-based resin having this melt flow rate shows good moldability, in detail, it maintains suitable fluidity at the time of molding and has excellent extrusion properties.

Requirement [f]

The ethylene-based resin of the present invention has a value (HLMFR/MFR) of 50 or more and less than 150 and preferably 70 or more and less than 125, which is calculated by dividing a value of a melt flow rate (HLMFR) measured under a load of 21.6 kg by a value of a melt flow rate (MFR) measured under a load of 2.16 kg. The polyethylene-based resin having a value of HLMFR/MFR to the above range forms a hollow molded article excellent in appearance.

Examples of methods for increasing the value of HLMFR/MFR of the ethylene-based resin include broadening the molecular weight distribution by blending ethylene-based resins having different molecular weights or by performing continuous two-stage polymerization. The value of HLMFR/MFR of the ethylene-based resin may be adjusted to the above range by controlling the molecular weight distribution as mentioned above.

Furthermore, a preferred embodiment of the present invention is a hollow molded article, which may be monolayer or multilayer. Such hollow molded articles are suitably used for a fuel tank, an industrial chemical can and a bottle container for storing a detergent, a bleacher, a softener or the like.

Hereinafter, there will be specifically explained the ethylene-based resin related to the present invention and the blow molded article, preferably the hollow molded article using the resin.

Ethylene-Based Resin

The ethylene-based resin of the present invention is not particularly limited in constituents, composition ratio and constitution method as long as it satisfies the above requirements [a] to [c], preferably the above requirements [d] to [f] in addition to the above requirements [a] to [c]. In general, it is prepared by using an ethylene-based polymer (E) described later as an essential component and blending the polymer with an olefin-based resin (R) in which the above requirement [a] is different from that of the ethylene-based polymer (E) so that the blend will satisfy the above requirements [a] to [c], preferably [a] to [f]. Examples of the olefin-based resins (R) specifically include an ethylene-based polymer, a propylene-based polymer, a butene-based polymer, a 4-methyl-1-pentene-based polymer, a 3-methyl-1-butene-based polymer, a 1-hexene-based polymer, a 1-octene-based polymer and the like. Among these, an ethylene-based polymer (E') in which the above requirement [a] is different from that of the ethylene-based polymer (E) is preferred. Such ethylene-based polymers (E') include low density polyethylenes produced by using a Ziegler-Natta catalyst such as ULTZEX 15150J, ULTZEX 20100J (trade names, manufactured by Prime Polymer Co., Ltd.) and the like; low density polyethylenes produced by using a metallocene catalyst such as EVOLUE SP1540, EVOLUE SP2040 (trade names, manufactured by Prime Polymer Co., Ltd.) and the like; high-pressure low density polyethylenes such as MIRASON 11P, MIRASON 14P (trade names, manufactured by Prime Polymer Co., Ltd.) and the like; and high density polyethylenes such as HI-ZEX 7800M, HI-ZEX 1810J (trade names, manufactured by Prime Polymer Co., Ltd.) and the like. Of the ethylene-based polymers (E'), the high-pressure low density polyethylenes, the high density polyethylenes and the linear low density polyethylenes are preferred.

In the ethylene-based resin of the present invention, the total amount of the ethylene-based polymer (E) and the ethylene-based polymer (E') based on the ethylene-based resin accounts for typically 70% by weight or more, preferably 80% by weight or more, more preferably 90% by weight or more and especially preferably 100% by weight. In addition, the composition ratio of the ethylene-based polymer (E') to the total of the ethylene-based polymer (E) and the ethylene-based polymer (E') in the ethylene-based resin of the present invention is typically 50% by weight or less, preferably 30% by weight or less and more preferably 20% by weight or less. Furthermore, the ethylene-based polymers (E) may be used singly or in combination of two or more kinds.

Next, there will be explained a method for producing the ethylene-based polymer (E) related to the present invention.

Production Method for Ethylene-Based Polymer (E)

The ethylene-based polymer (E) related to the present invention may be obtained, for example, by homopolymerizing ethylene or copolymerizing ethylene with an $\alpha$-olefin having 3 to 20 carbon atoms in the presence of a catalyst for olefin polymerization formed from

(A) a transition metal compound in which a cyclopentadienyl group and a fluorenyl group are bonded by covalent bond crosslinking containing a Group 14 atom;
(B) at least one compound selected from
(B-1) an organometallic compound,
(B-2) an organoaluminum oxy compound and
(B-3) a compound which reacts with the transition metal compound to form an ion pair; and
(C) a carrier.

In further detail, the above (A), (B) and (C) used in the invention are as follows.

(A) Transition Metal Compound

As the transition metal compounds (A), there are preferably used the transition metal compounds represented by the general formulae (1) and (2) described below.

[Chemical Formula 1]

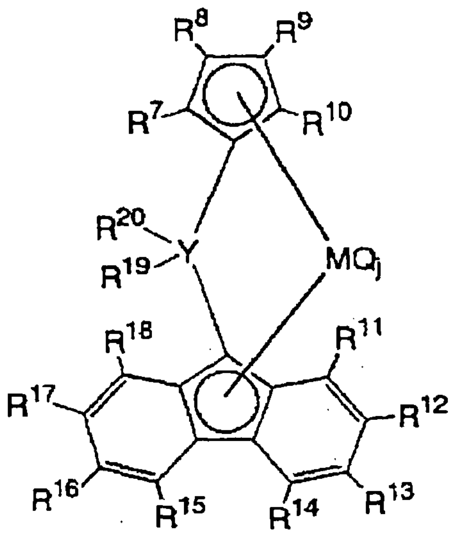

... (1)

[Chemical Formula 2]

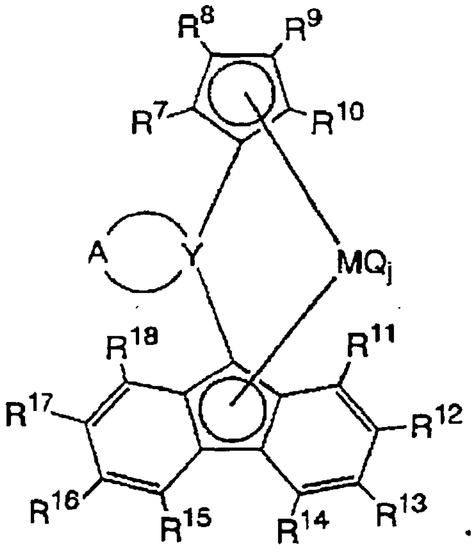

... (2)

[In the above general formulae (1) and (2), $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$ and $R^{20}$ are selected from a hydrogen atom, a hydrocarbon group and a silicon-containing hydrocarbon group and may be the same or different, two adjacent substituents from $R^7$ to $R^{18}$ may be bonded together to form a ring, A is a divalent hydrocarbon group having 2 to 20 carbon atoms which may contain a partially unsaturated bond and/or an aromatic ring and forms a ring structure together with Y, A may contain two or more ring structures including the ring that it forms together with Y, Y is carbon or silicon, M is a metal selected from Group 4 in the Periodic Table, Q may be the same or different from each other and is selected from a halogen, a hydrocarbon group, an anionic ligand and a neutral ligand which can coordinate with a lone electron pair, and j is an integer from 1 to 4.]

In the present invention, among the transition metal compounds represented by the above general formulae (1) and (2), a compound in which $R^7$ to $R^{10}$ are each a hydrogen atom, Y is a carbon atom, M is Zr and j is 2 is preferably used.

The transition metal compound (A) used in Examples described later is specifically represented by the following general formula (3), but the present invention is not at all limited thereto.

[Chemical Formula 3]

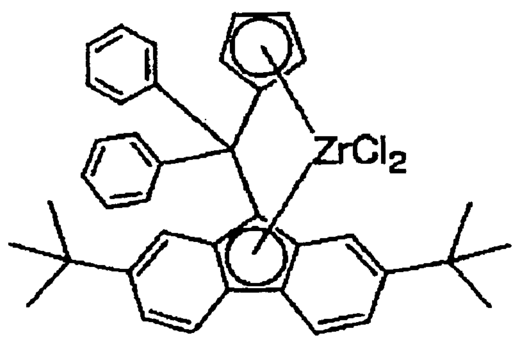

... (3)

The structure of the transition metal compound was determined by using 270 MHz 1H-NMR (GSH-270, manufactured by JEOL Ltd.) and FD-Mass Spectrometer (SX-102A, manufactured by JEOL Ltd.).

The transition metal compound (A) represented by the above general formula (1) or (2) may be prepared, for

example, according to a method described in WO 2001/27124.

(B-1) Organometallic Compound

The organometallic compounds (B-1) used if necessary in the present invention include specifically an organoaluminum compound as described below.

General Formula $R^a{}_mAl(OR^b)_nH_pX_q$

(In the formula, $R^a$ and $R^b$ may be the same or different from each other and represent a hydrocarbon group having 1 to 15 carbon atoms, preferably having 1 to 4 carbon atoms, X represents a halogen atom, m is a number of $0<m\leq3$, n is a number of $0\leq n<3$, p is a number of $0\leq p<3$, q is a number of $0\leq q<3$, and $m+n+p+q=3$.)

The aluminum compound used in Examples in the invention is triisobutylaluminum or triethylaluminum.

(B-2) Organoaluminum Oxy Compound

The organoaluminum oxy compound (B-2) used if necessary in the present invention may be a conventionally well-known aluminoxane, or may be an organoaluminum oxy compound insoluble in benzene as illustrated in Japanese Patent Application Laid-Open Publication No. H02-78687.

The organoaluminum oxy compound used in Examples described later is a commercially available MAO-toluene solution manufactured by Nippon Aluminum Alkyls, Ltd.

(B-3) Compound Which Reacts with Transition Metal Compound to Form Ion Pair

The compound (B-3) which reacts with the transition metal compound (A) to form an ion pair is referred to as the "ionized ionic compound" hereinafter. The compouns include Lewis acids, ionic compounds, borane compounds, carborane compounds and the like, which are described in Japanese Patent Application Laid-Open Publication No. H01-501950, Japanese Patent Application Laid-Open Publication No. H01-502036, Japanese Patent Application Laid-Open Publication No. H03-179005, Japanese Patent Application Laid-Open Publication No. H03-179006, Japanese Patent Application Laid-Open Publication No. H03-207703, Japanese Patent Application Laid-Open Publication No. H03-207704, US Patent Publication No. 5321106 and the like. In addition, the compounds (B-3) also include heteropoly compounds and isopoly compounds. Such ionized ionic compounds (B-3) may be used singly or in combination of two or more kinds.

In Examples described later, the above mentioned (B-1) and (B-2) were used as the component (B).

(C) Carrier

The carrier (C) used if necessary in the present invention is an inorganic or an organic compound and is a granular or fine particulate solid.

Among these, as the inorganic compound, a porous oxide, an inorganic halide, clay, a clay mineral or an ion-exchangeable layered compound is preferred.

Such porous oxides vary in their properties depending on the types and production methods, however, the carrier used in the present invention preferably has a particle size of 1 to 300 μm and preferably 3 to 200 μm, a specific surface area of 50 to 1000 $m^2/g$ and preferably 100 to 800 $m^2/g$ and a fine pore volume of 0.3 to 3.0 $cm^3/g$. Such carrier is used after sintered at 80 to 1000°C and preferably at 100 to 800°C if necessary.

The carrier used in Examples described later is $SiO_2$ having an average particle size of 12 μm, a specific surface area of 800 $m^2/g$ and a fine pore volume of 1.0 $cm^3/g$, which is manufactured by Asahi Glass Co., Ltd.

Polymerization

The ethylene-based polymer (E) may be obtained by homopolymerizing ethylene or copolymerizing ethylene with an α-olefin having 3 to 20 carbon atoms in the presence of the catalyst for olefin polymerization as described above.

In performing the polymerization, the use and addition order of the components are arbitrarily selected and the following embodiments (P-1) to (P-7) are mentioned as

examples.

(P-1): A catalyst component in which the transition metal compound (A) (hereinafter, simply referred to as the "component (A)") is supported on the carrier (C), and at least one component (B) (hereinafter, simply referred to as the "component (B)") selected from the organometallic compound (B-1), the organoaluminum oxy compound (B-2) and the ionized ionic compound (B-3) are added into a polymerization reactor in an arbitrary order.

(P-2): A catalyst in which the component (A) and the component (B) are supported on the carrier (C) is added into a polymerization reactor.

(P-3) : A catalyst component in which the component (A) and the component (B) are supported on the carrier (C), and the component (B) are added into a polymerization reactor in an arbitrary order. In this case, the components (B) may be the same or different.

(P-4) : A catalyst component in which the component (B) is supported on the carrier (C), and the component (A) are added into a polymerization reactor in an arbitrary order.

(P-5) : A catalyst component in which the component (B) is supported on the carrier (C), the component (A) and the component (B) are added into a polymerization reactor in an arbitrary order. In this case, the components (B) may be the same or different.

(P-6): A catalyst in which the component (A) and the component (B) are supported on the carrier (C) is brought into contact with the component (B) in advance, and the resultant catalyst component is added into a polymerization reactor. In this case, the components (B) may be the same or different.

(P-7): A catalyst in which the component (A) and the component (B) are supported on the carrier (C) is brought into contact with the component (B) in advance. The resultant catalyst component and the component (B) are added into a polymerization reactor in an arbitrary order. In this case, the components (B) may be the same or different.

In the above embodiments (P-1) to (P-7), at least two components may be brought into contact in advance.

An olefin may be prepolymerized on a solid catalyst component in which the component (A) and the component (B) are supported on the carrier (C). The prepolymerized solid catalyst component contains the prepolymerized polyolefin at a ratio of typically 0.1 to 1000 g, preferably 0.3 to 500 g and especially preferably 1 to 200 g, per 1 g of the solid catalyst component.

In addition, for the purpose of allowing the polymerization to proceed smoothly, an antistatic agent, an antifouling agent and the like may be used simultaneously or may be supported on the carrier.

The polymerization may be carried out by either a liquid-phase polymerization method such as solution polymerization, suspension polymerization and the like or a gas-phase polymerization method, and especially suspension polymerization is preferred.

Inert hydrocarbon mediums used in the liquid-phase polymerization method include specifically aliphatic hydrocarbons such as propane, butane, pentane, hexane, heptane, octane, decane, dodecane, kerosene and the like; alicyclic hydrocarbons such as cyclopentane, cyclohexane, methylcyclopentane and the like; aromatic hydrocarbons such as benzene, toluene, xylene and the like; halogenated hydrocarbons such as ethylene chloride, chlorobenzene, dichloromethane and the like; and mixtures thereof. Further, the olefin itself may be used as a solvent.

In performing the (co) polymerization by using the catalyst for olefin polymerization as mentioned above, the component (A) is used in an amount of typically $10^{-12}$ to $10^{-2}$ mol and preferably $10^{-10}$ to $10^{-3}$ mol, per one liter of the reaction volume.

The component (B-1) used if necessary is used at such an amount that the molar ratio of the component (B-1) to the transition metal atom (M) in the component (A), that is, [(B-1)/M], is typically 0.01 to 100,000 and preferably 0.05 to 50,000.

The component (B-2) used if necessary is used at such an amount that the molar ratio of the aluminum atom in the component (B-2) to the transition metal atom (M) in the component (A), that is, [(B-2)/M], is typically 10 to 500,000 and preferably 20 to 100,000.

The component (B-3) used if necessary is used at such an amount that the molar ratio of the component (B-3) to the transition metal atom (M) in the component (A), that is, [(B-3)/M], is typically 1 to 10 and preferably 1 to 5.

Further, the polymerization temperature in the use of such catalyst for olefin polymerization is in the range of typically -50 to +250°C, preferably 0 to 200°C and especially preferably 60 to 170°C. The polymerization pressure is typically from normal pressure to 100 kg/$cm^2$, preferably from normal pressure to 50 kg/$cm^2$, and the polymerization reaction may be carried out in any of a batch system (batch-wise), a semicontinuous system and a continuous system. Among these, the batch system is preferred. The polymerization is carried out in a gas phase or in a slurry phase in which polymer particles are precipitated out in the solvent. In the present invention, the polymerization is preferably carried out in two or more stages with different reaction conditions. In addition, in the case of slurry polymerization or gas phase polymerization, the polymerization temperature is preferably from 75 to 90°C and more preferably from 80 to 85°C. When the polymerization is carried out within this temperature range, an ethylene-based copolymer having a narrower composition distribution may be obtained. The obtainable polymer is in the form of particles having a diameter

of tens to thousands of micrometers. When the polymerization is carried out with a continuous system composed of two polymerization reactors, there are required operations such as dissolving the polymer in a good solvent and then precipitating the polymer in a poor solvent, sufficiently melt-kneading the polymer with a specific kneader, and the like.

When the ethylene-based polymer (E) is produced, for example, in two stages, it is preferable that an ethylene polymer having an intrinsic viscosity of 0.3 to 1.8 dl/g should be produced in an amount of 40 to 80% by weight based on the ethylene-based polymer (E) in the first stage, and that a (co)polymer having an intrinsic viscosity of 2.0 to 8.0 dl/g should be produced in an amount of 20 to 60% by weight based on the ethylene-based polymer (E) in the second stage. The order may be reversed. For example, the ethylene-based polymer (E) may be obtained by producing an ethylene homopolymer in the first stage and producing an ethylene-$\alpha$-olefin copolymer in the second stage.

The intrinsic viscosity ([$\eta$]) is a value measured at 135°C using a decalin solvent. In detail, approximately 20 mg of the ethylene-based polymer is dissolved in 15 ml of decalin and the specific viscosity $\eta_{sp}$ is measured at 135°C in an oil bath. The dacalin solution is diluted by adding 5 ml of the decalin solvent and then the specific viscosity $\eta_{sp}$ is measured in the same manner. The diluting operation is repeated further twice and the intrinsic viscosity is determined as $\eta_{sp}$/C which the concentration (C) is extrapolated to 0.

$$[\eta] = \lim (\eta_{sp}/C) \quad (C \rightarrow 0)$$

The molecular weight of the ethylene-based polymer may be adjusted by allowing hydrogen to exist in the polymerization system or by changing the polymerization temperature and further may be adjusted by appropriately selecting the component (B).

The comonomer content of the ethylene-based polymer (E) related to the present invention obtained by the above polymerization methods is typically 0.5% by mol or less and preferably 0.01 to 0.5% by mol.

The polymer particles obtained by the polymerization reaction may be pelletized by the following methods.

[1] The ethylene-based polymer particles and additional components as desired are mechanically blended using an extruder, a kneader and the like and then the blend is cut into a predetermined size.

[2] The ethylene-based polymer and additionl components as desired are dissolved in a suitable good solvent (for example, hydrocarbon solvents such as hexane, heptane, decane, cyclohexane, benzene, toluene, xylene and the like), then the solvent is removed, the residue is mechanically blended using an extruder, a kneader and the like, and then blend is cut into a predetermined size.

The ethylene-based polymer (E) thus produced typically satisfies the above-mentioned requirements [a] and [b], and preferably satisfies the above-mentioned requirements [d], [e] and [f], but typically has a melt breaking drawing rate of more than 90 (m/min) and does not satisfy the above requirement [c].

Preparation of Ethylene-Based Resin

Methods for preparing the ethylene-based resin of the present invention by blending the ethylene-based polymer (E) and the olefin-based resin (R), preferably the ethylene-based polymer (E'), include various well-known methods. For example, the methods include a method of mixing the polymers with a Henschel mixer, a V-blender, a ribbon blender, a tumbler blender and the like and granulating or grinding the mixture; and a method in which the mixture obtained as described above is melt-kneaded with a single-screw extruder, a twin-screw extruder, a kneader, a Bunbary mixer and the like, and the blend is granulated or ground.

The ethylene-based resin of the present invention may contain additives such as weathering stabilizers, heat-stabilizers, antistatic agents, anti-slip agents, anti-blocking agents, anti-fogging agents, lubricants, dyes, nucleating agents, plasticizers, anti-aging agents, hydrochloric acid absorbers, antioxidants and the like; and pigments such as carbon black, titanium oxide, titanium yellow, phthalocyanine, isoindolinone, quinacridone compound, condensed azo compound, ultramarine blue, cobalt blue and the like, if needed, as long as the object of the present invention is not impaired.

The ethylene-based resin of the present invention may be molded into blow molded articles, extrusion molded articles such as pipes or profiles, injection molded articles and the like. These molded articles include molded articles containing a part composed of the ethylene-based resin and a part composed of other resins (laminates and the like).

Hollow Molded Article

The blow molded article of the present invention wherein a hollow molded article is a preferred embodiment may be obtained by molding the above ethylene-based resin. The hollow molded article related to the present invention

may have a single layer as in a monolayer container or may have two or more layers as in a multilayer container.

For example, when the multilayer container is formed in two layers, one layer may be formed of the ethylene-based resin of the present invention, and the other layer may be formed of a resin different from the ethylene-based resin of the present invention, or may be formed of the ethylene-based resin of the present invention which has different properties from those of the polyethylene-based resin used in the first layer.

Examples of the above-mentioned different resins include polyamides (Nylon 6, Nylon66, Nylon 12, a copolymer nylon and the like), ethylene-vinylalcohol copolymers, polyesters (polyethyleneterephthalate and the like), modified polyolefins and the like.

The polyethylene hollow molded article related to the present invention is prepared by a conventionally well-known hollow molding (blow molding) method. There are various blow molding methods, which are roughly classified into an extrusion blow molding method, a two-stage blow molding method and an injection molding method. In the present invention, the extrusion blow molding method is especially preferably employed.

The hollow molded article prepared as mentioned above is suitable for applications such as a fuel tank, an industrial chemical can, a bleacher container, a detergent container, a container for bleachers, and the like, and is suitably used, for example, as a container for surfactants or a container for bleachers for household use and business use, including cosmetics, detergents, fabric softeners, shampoos, conditioners, hair treatments and the like.

Hereinafter, the present invention will be explained based on Examples, but the present invention is not limited by these Examples in any way.

[EXAMPLES]

The measurement methods for resins and evaluation methods for molded articles adopted in Examples of the present application are as follows.

[m1] HLMFR and MFR: According to JIS K7210, at 190°C, under a load of 21.6 kg and 2.16 kg, respectively.

[m2] Flexural modulus: According to ASTM-D-790.

[m3] ESCR measurement method according to Bent method: According to ASTM-D-1693, a press sheet with a thickness of 2 mm at 50°C, a test solution that is a 10% aqueous solution of a nonionic surfactant (trade name: Antarox Co-630 manufactured by Wako Pure Chemical Industries Ltd.).

[m4] Measurement method for melt tension: A capillary rheometer manufactured by Toyo Seiki Seisaku-Sho, Ltd. was used. The melt tension was determined as a tension observed under the conditions of a measurement temperature of 190°C, a barrel diameter of 9.5 mm, a barrel extrusion rate of 15 mm/min, a nozzle diameter of 2.10 mm, a nozzle length of 8.0 mm and a drawing rate of 10 m/min.

[m5] Measurement method of melt breaking drawing rate: A capillary rheometer manufactured by Toyo Seiki Seisaku-Sho, Ltd. was used. The melt breaking drawing rate was determined as a rate at which a mollten strand was broken when the drawing rate was increased while the molten strand was extruded from a nozzle under the conditions of a measurement temperature of 190°C, a barrel diameter of 9.5 mm, a barrel extrusion rate of 15 mm/min, a nozzle diameter of 2.10 mm and a nozzle length of 8.0 mm.

[m6] Density: According to JIS K6922-2, the strand used in the measurement of NMR was annealed in boiling water for 30 minutes and measured for density.

[m7] Parison cutting evaluation of molded article: The ethylene-based resin was blow molded under the molding conditions of a polyethylene molding temperature of 180°C, a resin extrusion rate of 8 kg/h and a mold temperature of 25°C using an extrusion blow molding machine (a screw diameter of 50 mm, manufactured by Placo Co., Ltd.), and cylindrical bottles with a volume of 1 little and a weight of 50 g were obtained.

In the prouction of bottles, the parisons were evaluated to be easily cuttable when 30 parisons were smoothly cut sucessively. If any cutting failures such as a parison fusing to the cutter occurred during the 30 shots, the parisons were evaluated to be inferior in cutting properties. When a parison was extructed after the previous parison was cut, the diameter in center of the parison was visually observed. When the diameter was larger than 30% of the core diameter of the die, the parisons were evaluated to be stable. If the diameter was smaller, the parisons were evaluated to be unstable.

[Production Example 1]

[Preparation of Solid Catalyst Component]

After 8.5 kg of silica dried at 200°C for 3 hours was suspended in 33 liters of toluene, 82.7 liters of a methylaluminoxane solution (Al=1.42 mol/liter) was added dropwise over 30 minutes to the suspension. Thereafter, the resulting mixture was heated to 115°C in 1.5 hours and allowed to react at that temperature for 4 hours. Subsequently, the reaction mixture was cooled to 60°C and the supernatant liquid was removed by decantation. The resulting solid catalyst component was washed with toluene three times, and then resuspended in toluene to give a solid catalyst component (α) (the total volume: 150 liters).

[Preparation of Supported Catalyst]

To a reactor, in which the air had been sufficiently replaced with nitrogen, was added 19.60 mol (in terms of aluminum) of the solid catalyst component (α) suspended in toluene. To the resulting suspension, while stirring, was added 2 liters (74.76 mmol) of a 37.38 mmol/liter solution of diphenylmethylene(cyclopentadienyl)(2,7-di-t-butylfluorenyl) zirconium dichloride at room temperature (20 to 25°C) and the mixture was stirred for 60 minutes. After termination of the stirring, the supernatant liquid was removed by decantation and the mixture was washed with 40 liters of n-hexane twice. The resulting supported catalyst was reslurried in n-hexane to give a solid catalyst component (β) as 25 liters of a catalyst suspension.

[Prepolymerization of Solid Catalyst Component (β)]

To a reactor equipped with a stirrer under a nitrogen atmosphere, 15.8 liters of purified n-hexane and the above-mentioned solid catalyst component (β) were added, and then 5 mol of triisobutylaluminum was added. Thereafter, while stirring the resulting mixture, prepolymerization was carried out with ethylene so that 3 g of polyethylene was produced per one gram of the solid component for 4 hours. The polymerization temperature was maintained at 20 to 25°C.
After completion of the polymerization reaction, stirring was stopped and then the supernatant liquid was removed by decantation. The residue was washed with 35 liters of n-hexane 4 times. The resulting supported catalyst was suspended in 20 liters of n-hexane to give a solid catalyst component (γ) as a catalyst suspension.

[Polymerization]

To a first polymerization reactor, 45 liters/h of hexane, 0.11 mmol/h (in terms of Zr atom) of the solid catalyst component (γ), 20 mmol/h of triethylaluminum, 5.0 kg/h of ethylene, and hydrogen were continuously supplied. Furthermore, while continuously withdrawing the contents in the polymerization reactor so that the liquid level in the polymerization reactor was constant, polymerization was carried out under the conditions of a polymerization temperature of 85°C, a reaction pressure of 8.5 $kg/cm^2G$ and an average residence time of 2.5 hours.
The unreacted ethylene and hydrogen were substantially removed from the contents continuously withdrawn from the first polymerization reactor in a flash drum maintained at an internal pressure of 0.2 $kg/m^2G$ and at 65°C. Thereafter, the contents were continuously supplied to the second polymerization reactor, together with 35 liters/h of hexane, 4.0 kg/h of ethylene, 0.2 N-liter/h of hydrogen and 130 g/h of 1-hexene, and polymerization was continuously carried out under the conditions of a polymerization temperature of 80°C, a reaction pressure of 4.5 $kg/cm^2G$ and an average residence time of 1.2 hours.
In the second polymerization reactor too, the contents in the polymerization reactor were continuously withdrawn so that the liquid level in the polymerization reactor was constant, and the hexane and unreacted monomer in the contents were removed by a solvent separator and then the resulting contents were dried to give an ethylene-based polymer. The resulting ethylene-based polymer had a density of 958 ($kg/m^3$) and an MFR of 0.5 (g/10 min).
Subsequently, to 100 parts by weight of the polymer particles, 0.15 part by weight of tri(2,4-di-t-butylphenyl) phosphate as a secondary antioxidant, 0.05 part by weight of calcium stearate as a hydrochloric acid absorber and 0.13 part by weight of lauryldiethanolamine for the purpose of preventing dust adhesion to a bottle were added.

[Example 1]

To 95 parts by weight of the composition (E1) obtained in Production Example 1, 5 parts by weight of MIRASON 102 (trade name, manufactured by Prime Polymer Co., Ltd.) having an MFR of 0.3 (g/10 min) and a density of 921 ($kg/m^3$), which was a low density polyethylene produced by a high pressure method was dry blended. Then, a sample for measurement was prepared by pelletizing the resulting mixture at a temperature of 220°C and an resin extrusion rate of 20 kg/h using a single-screw extruder (a screw diameter of 65 mm, L/D=25) manufactured by Placo Co., Ltd.
Table 1 shows the physical properties of the ethylene-based resin thus obtained and the moldability and physical properties of bottles obtained from the ethylene-based resin.
It is found that the resin is excellent in balance among the ESCR, the flexural modulus, the melt tension and the melt breaking drawing rate compared to Comparative Examples.

[Example 2]

A polyethylene-based resin was prepared by blending 90 parts by weight of the composition (E1) obtained in Production Example 1 and 10 parts by weight of a commercially available high density polyethylene, HI-ZEX 7800M (trade name, manufactured by Prime Polymer Co., Ltd.) having an MFR of 0.04 (g/10 min) and a density of 954 ($kg/m^3$). Table 1 shows the physical properties of the polyethylene-based resin and hollow molded articles composed of the polyethylene-based resin.
It is found that the resin is excellent in balance among the ESCR, the flexural modulus, the melt tension and the melt breaking drawing rate compared to Comparative Examples.

[Example 3]

A polyethylene-based resin was prepared by blending 75 parts by weight of the composition (E1) obtained in Production Example 1, 15 parts by weight of a commercially available high density polyethylene, Hi-zex 7700M (trade name, manufactured by Prime Polymer Co., Ltd.) having an MFR of 0.28 (g/10 min) and a density of 950 ($kg/m^3$), and 10 parts by weight of a high density polyethylene, HI-ZEX 1810J (trade name, manufactured by Prime Polymer Co., Ltd.) having an MFR of 35 (g/10 min) and a density of 969 ($kg/m^3$). Table 1 shows the physical properties of the polyethylene-based resin and hollow molded article composed of the polyethylene-based resin.
It is found that the resin is excellent in balance among the ESCR, the flexural modulus, the melt tension and the melt breaking drawing rate compared to Comparative Examples.

[Example 4]

A composition (E2) was obtained by using the same compounding formula as in Production Example 1 for ethylene-based polymer particles having a density of 963 ($kg/m^3$) which had been produced according to the method described in Production Example 1. A polyethylene-based resin was prepared by blending 95 parts by weight of the composition (E2) and 5 parts by weight of MIRASON 102 (trade name, manufactured by Prime Polymer Co., Ltd.) which was a low density polyethylene produced by a high pressure method. Table 1 shows the physical properties of the polyethylene-based resin and hollow molded articles composed of the polyethylene-based resin.

[Example 5]

A polyethylene-based resin was prepared by blending 90 parts by weight of the composition (E2) obtained in Example 4 and 10 parts by weight of a commercially available high density polyethylene, HI-ZEX 7800M (trade name, manufactured by Prime Polymer Co., Ltd.) having an MFR of 0.04 (g/10 min) and a density of 954 ($kg/m^3$). Table 1 shows the physical properties of the polyethylene-based resin and hollow molded articles composed of the polyethylene-based resin.

[Example 6]

A composition (E3) was obtained by using the same compounding formula as in Production Example 1 for ethylene-based polymer particles having a density of 966 ($kg/m^3$) which had been produced according to the method described in Production Example 1. A polyethylene-based resin was prepared by blending the composition (E3) and 10 parts by weight of a commercially available high density polyethylene, HI-ZEX 7800M (trade name, manufactured by Prime Polymer Co., Ltd.) having an MFR of 0.04 (g/10 min) and a density of 954 ($kg/m^3$). Table 1 shows the physical properties of the polyethylene-based resin and hollow molded articles composed of the polyethylene-based resin.

[Comparative Example 1]

Table 1 shows the physical properties of the ethylene-based polymer composite alone obtained in Production Example 1 and the physical properties of hollow molded articles composed of the resin.
It is found that the resin is inferior in balance among the ESCR, the flexural modulus, the melt tension and the melt breaking drawing rate compared to Examples.

[Comparative Example 2]

Table 1 shows the physical properties of a commercially available high density polyethylene, HI-ZEX 6008B (trade name, manufactured by Prime Polymer Co., Ltd.) which was produced using a Ziegler-based catalyst and hollow

molded articles composed of the resin.

It is found that the resin is inferior in balance among the ESCR, the flexural modulus, the melt tension and the melt breaking drawing rate compared to Examples.

[Comparative Example 3]

Table 1 shows the physical properties of a commercially available high density polyethylene, HB 333RE (trade name, manufactured by Japan Polyethylene Corporation) and hollow molded articles composed of the resin.

It is found that the resin is inferior in balance among the ESCR, the flexural modulus, the melt tension and the melt breaking drawing rate compared to Examples.

[Comparative Example 4]

Table 1 shows the physical properties of the ethylene-based polymer composition (E2) used in Example 4 and hollow molded articles composed of the resin. It is found that the resin is inferior in balance among the ESCR, the flexural modulus, the melt tension and the melt breaking drawing rate compared to Examples.

[Comparative Example 5]

Table 1 shows the physical properties of the ethylene-based polymer composition (E3) used in Example 4 and hollow molded articles composed of the resin. It is found that the resin is inferior in balance among the ESCR, the flexural modulus, the melt tension and the melt breaking drawing rate compared to Examples.

[Comparative Example 6]

Table 1 shows the physical properties of a commercially available high density polyethylene, HI-ZEX 3000B (trade name, manufactured by Prime Polymer Co., Ltd.) which had been produced using a Ziegler-based catalyst and hollow molded articles composed of the resin. It is found that the resin is inferior in balance among the ESCR, the flexural modulus, the melt tension and the melt breaking drawing rate compared to Examples.

[Table 1]

| | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|
| MFR (g/10 min) | 0.42 | 0.32 | 0.43 | 0.45 | 0.32 | 0.32 | 0.5 | 0.36 | 0.28 | 0.52 | 0.5 | 0.63 |
| HLMFR (g/10 min) | 35 | 33 | 48 | 36 | 31 | 33 | 42 | 35 | 33 | 40 | 42 | 45 |
| HLMFR/MFR | 83 | 103 | 112 | 80 | 97 | 103 | 80 | 97 | 117 | 77 | 84 | 71 |
| Density ($kg/m^3$) | 957 | 957 | 958 | 962 | 962 | 965 | 958 | 956 | 952 | 963 | 966 | 961 |
| Flexural modulus (MPa) | 1300 | 1300 | 1300 | 1550 | 1550 | 1700 | 1300 | 1250 | 1150 | 1550 | 1750 | 1450 |
| Melt tension (mN) | 75 | 69 | 56 | 90 | 80 | 85 | 49 | 85 | 100 | 48 | 45 | 60 |
| Melt breaking drawing rate (m/min) | 79 | 76 | 75 | 71 | 73 | 70 | 91 | 70 | 36 | 95 | 93 | 70 |
| ESCR according to Bent Method (h) | >600 | >600 | >600 | 280 | 300 | 200 | >600 | 200 | 100 | 300 | 150 | 20 |
| Parison cutting properties in bottle molding | Good | Good | Good | Good | Good | Good | Stringing | Good | Good | Stringing | Stringing | Good |

(continued)

| | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|
| Parison stability in bottle molding | Good | Good | Good | Good | Good | Good | No good | Good | Good | No good | No good | Good |

[INDUTRIAL APPLICABILITY]

The ethylene-based resin of the present invention is excellent in rigidity and ESCR, and excellent in parison stability and cutting properties, and the bottle formed from the resin is also excellent in appearance. The ethylene-based resin and the hollow molded article of the present invention are suitably used for applications such as a container for detergents, shampoos, conditioners, bleachers, fabric softeners, cosmetics, waxes, cooking oils, mayonnaise, green horseradish paste or the like, a fuel tank, an industrial chemical can, a drum, a water storage tank and the like.

## Claims

**1.** An ethylene-based resin simultaneously satisfying the following requirements [a] to [c]:

[a] the environmental stress cracking resistance (ESCR), T (hours), at 50°C is 500 hours or more in the case of a flexural modulus of 1000 MPa to 1500 MPa and is 100 hours or more in the case of a flexural modulus of 1500 MPa to 2000 MPa, as measured according to ASTM-D-1693;
[b] the melt tension at 190°C is 50 (mN) or more; and
[c] the melt breaking drawing rate is 90 (m/min) or less.

**2.** The ethylene-based resin according to claim 1, simultaneously satisfying the above requirements [a] to [c] and the following requirements [d] to [f]:

[d] the flexural modulus, M (MPa), satisfies $1000 \leq M \leq 2000$, as measured at 23°C according to ASTM-D-790;
[e] the MFR (g/10 min) is 0.10 or more and less than 2.0, as measured at 190°C under a load of 2.16 kg according to JIS K7210; and
[f] the MFR ratio between the MFR (g/10 min) under a load of 2.16 kg and the HLMFR (g/10 min) under a load of 21. 6 kg (HLMFR/MFR) is 50 or more and less than 150, as measured at 190°C according to JIS K7210.

**3.** A blow molded article formed of the ethylene-based resin according to claim 1 or 2.

**4.** The blow molded article according to claim 3, wherein the blow molded article is a fuel tank, an industrial chemical can or a bottle container.

**INTERNATIONAL SEARCH REPORT**

International application No.
PCT/JP2007/052646

A. CLASSIFICATION OF SUBJECT MATTER
*C08F10/02*(2006.01)i, *B65D1/00*(2006.01)i

According to International Patent Classification (IPC) or to both national classification and IPC

B. FIELDS SEARCHED

Minimum documentation searched (classification system followed by classification symbols)
C08F10/00-10/14, B65D1/00-1/48

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 09-169359 A (Mitsui Petrochemical Industries, Ltd.), 30 June, 1997 (30.06.97), Claims & EP 0769523 A2 & CN 1154935 A & CA 2188086 A & KR 0250567 B | 1-4 |
| X | JP 2002-003530 A (Mitsui Chemicals, Inc.), 09 January, 2002 (09.01.02), Claims & CA 1320658 A | 1-4 |
| X | JP 2002-080531 A (Mitsui Chemicals, Inc.), 19 March, 2002 (19.03.02), Claims (Family: none) | 1-4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 April, 2007 (09.04.07) | 17 April, 2007 (17.04.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2007/052646

C (Continuation). DOCUMENTS CONSIDERED TO BE RELEVANT

| Category* | Citation of document, with indication, where appropriate, of the relevant passages | Relevant to claim No. |
|---|---|---|
| X | JP 2003-292534 A (Mitsui Chemicals, Inc.), 15 October, 2003 (15.10.03), Claims & CN 1438263 A | 1-4 |

Form PCT/ISA/210 (continuation of second sheet) (April 2005)

INTERNATIONAL SEARCH REPORT

International application No.
PCT/JP2007/052646

An ethylene resin is recited in the claims of the present application. However, in view of the specific disclosure in the description and the working examples, it appears that a "resin" itself is not disclosed and a "polyethylene composition" is disclosed which comprises an ethylene-α-olefin copolymer and a low-MFR polyethylene or a polyethylene having a long chain branch added to the copolymer.

Such being the case, a search was made on a "polyethylene composition comprising an ethylene-α-olefin copolymer and a low-MFR polyethylene or a polyethylene having a long chain branch added to the copolymer.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003507538 A
- WO 200127124 A
- JP H0278687 B
- JP H01501950 B
- JP H01502036 B
- JP H03179005 B
- JP H03179006 B
- JP H03207703 B
- JP H03207704 B
- US 5321106 A